# EUROPEAN PATENT SPECIFICATION

(11) **EP 3 575 526 B1**
(45) Date of publication and mention of the grant of the patent: **16.08.2023**
(21) Application number: 18744552.3
(22) Date of filing: 24.01.2018
(51) Int. Cl.: E05B 85/16, B60J 5/04, E05B 81/76

(54) **HANDLE DEVICE**
GRIFFVORRICHTUNG
DISPOSITIF DE POIGNÉE

(30) Priority: 24.01.2017 JP 2017009928
(43) Date of publication of application: 04.12.2019
(73) Proprietor: Alpha Corporation, Yokohama-shi, Kanagawa 236-0004 (JP)
(72) Inventor: ONO, Takashi, Yokohama-shi, Kanagawa 236-0004 (JP); TOYAMA, Takao, Yokohama-shi, Kanagawa 236-0004 (JP)
(74) Representative: Daub, Thomas
(86) International application number: PCT/JP2018/002141
(87) International publication number: WO 2018/139488

(56) References cited:
- EP-A1- 2 275 243
- WO-A1-2005/124066
- WO-A1-2014/125577
- WO-A1-2015/087932
- DE-A1-102005 031 454
- DE-A1-102006 059 208
- DE-A1-102008 042 330
- JP-A- 2004 169 427
- JP-A- 2004 169 427
- JP-A- 2004 537 664
- JP-A- 2004 537 664
- JP-A- 2010 174 562
- US-A1- 2005 073 804
- US-A1- 2007 216 174

## Description

### [Technical Field]

The present invention relates to a handle device.

### [Background Art]

Vehicles equipped with a function called smart entry (or passive entry) are in widespread use. In the smart entry, an authentication device mounted on a vehicle and a portable device (electronic key) carried by a user perform wireless communication, and when the authentication is established, a door lock device provided on the vehicle door can be locked or unlocked. Locking or unlocking of the door lock device is performed by detecting a locking operation or unlocking operation of the user with respect to an operation handle. In this kind of handle device, in order to detect the locking operation or unlocking operation of the user, a method is used to determine contact (or approach) of a human body to the operation handle by disposing a sensor electrode in the operation handle, and detecting a change in capacitance.

In addition, there is a need for a handle device that emphasizes design in recent years, and it is known that a decoration region having a predetermined design is set on the surface of the operation handle. The decoration region is formed, for example, by coating the surface of the operation handle with a metal plating, and the appearance of the operation handle presents metallic gloss due to the decoration region.

In the decoration region to which the metal plating is applied, the whole region has conductivity. Therefore, when a change in capacitance is detected using the sensor electrode, there is a possibility that the contact of the human body is determined by touching any position in the decoration region.

In a door handle device disclosed in Patent Literature 1, a decoration piece for decoration is disposed on a surface of a handle case constituting the operation handle. In such a door handle device, a sensor electrode is accommodated in the handle case, and a conductive piece capacitively coupled to the sensor electrode is disposed between the decoration piece and the handle case. In this case, the decoration piece is formed not to couple to the sensor electrode, and the contract of the human body cannot be determined by touching the decoration piece portion.

### [Prior Art Documents]

### [Patent Documents]

[Patent Document 1] JP-A-2012-112201

In the door handle device disclosed in Patent Literature 1, a handle piece capacitively coupled to the sensor electrode is added in order to prevent a decrease in detection sensitivity of the sensor electrode accommodated in the handle case. Therefore, the number of parts increases and the assembly operation becomes complicated.

Further handle devices are disclosed in the documents US 2005/073804 A1 and US 2007/216174 A1.

### [Summary of Invention]

### [Problems that the Invention is to Solve]

According to the present invention, an increase in the number of parts is prevented and detection with excellent sensitivity of the sensor electrode can be obtained in the handle device.

According to the present invention, a handle device includes an operation handle which is assembled to a door and serves as a handle during an opening/closing operation of the door, and a sensor electrode which is provided in the operation handle and which is configured to detect a change in capacitance in response to contact or approach of a human body to a detection region set on a surface of the operation handle. The surface of the operation handle includes the detection region and a decoration region surrounding all or a part of a periphery of the detection region. The detection region is electrically insulated from the decoration region, and the sensor electrode is disposed on a back surface of a substrate which is a part of the surface of the operation handle.

According to the embodiments of the present invention, the operation handle includes a body grip facing the door with a gap therebetween and a cover grip assembled to cover an outer side of the body grip. The cover grip includes an opening portion passing through front and back sides of the cover grip. The body grip includes a side wall portion facing outside from the opening portion of the cover grip in a state that the cover grip is assembled. The detection region is disposed on the side wall portion.

According to the present invention, the decoration region has a metal plating coated on the surface of the operation handle. The detection region has a color tone consistent with the metal plating of the decoration region.

According to the present invention, the detection region has a non-conductive film material transferred to the surface of the operation handle, transferred to the surface of the side wall portion of the body grip.

According to the present invention, it is possible to provide a handle device which prevents an increase in the number of parts and which is excellent in detection sensitivity of the sensor electrode.

### [Brief Description of Drawings]

Fig. 1 is a front view schematically showing main parts of an outside handle device.
Fig. 2 is a front view showing main parts of a cover grip forming the operation handle shown in Fig. 1.
Fig. 3 is a front view showing main parts of a body grip of the operation handle shown in Fig. 2.
Fig. 4 is a perspective view showing the main parts of the body grip.
Fig. 5 is a sectional view of the operation handle shown in Fig. 1 along A-A.

### [Description of Embodiments]

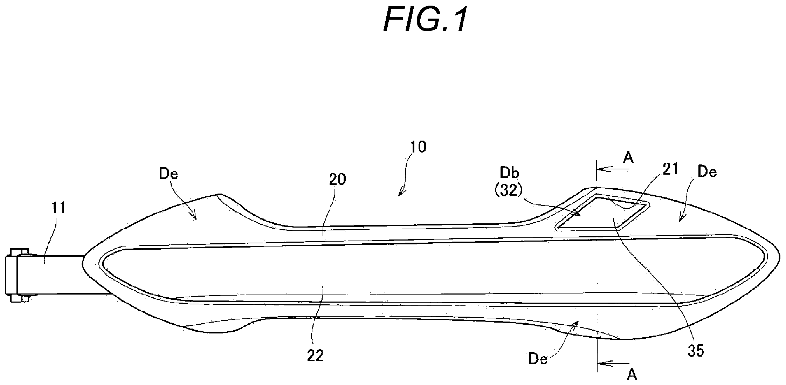

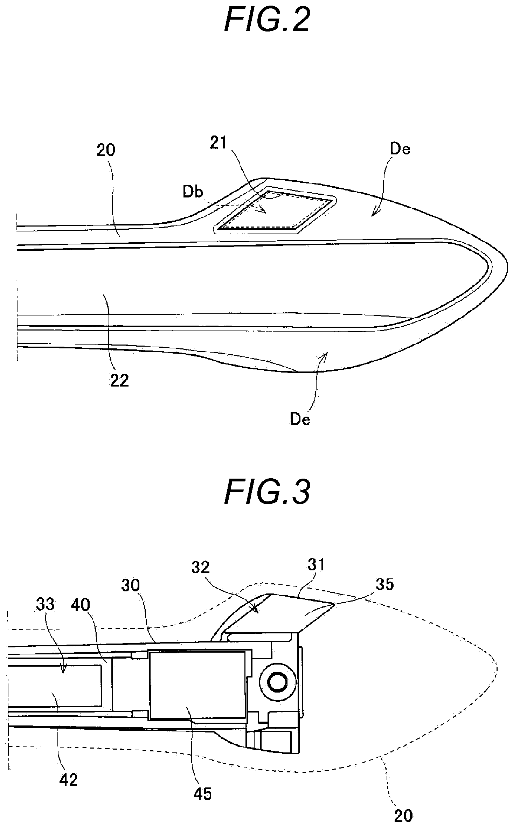

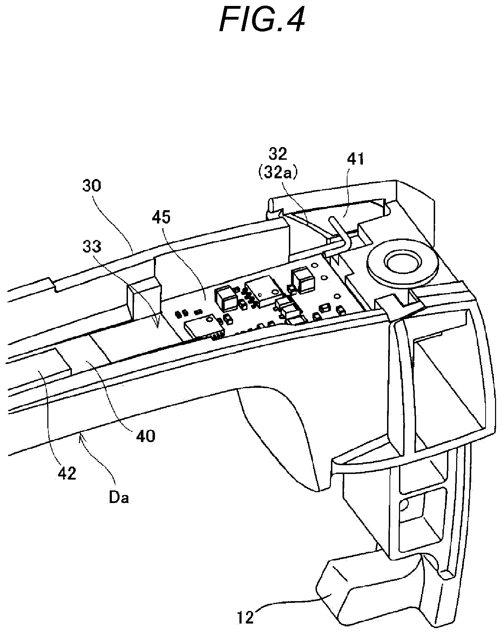

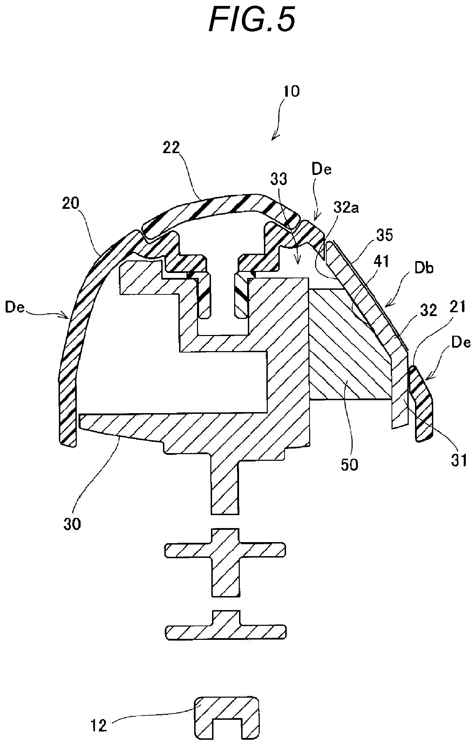

Hereinafter, an outside handle device according to the present invention will be described with reference to the drawings . Here, Fig. 1 is a front view schematically showing main parts of the outside handle device according to the present invention, Fig. 2 is a front view showing main parts of a cover grip 20 forming an operation handle 10 shown in Fig. 1. Fig. 3 is a front view showing main parts of a body grip 30 of the operation handle 10 shown in Fig. 2. Fig. 4 is a perspective view showing the main parts of the body grip 30. Fig. 5 is a sectional view of the operation handle 10 shown in Fig. 1 along A-A.

The outside handle device is a handle device provided on a side door of a vehicle, and mainly includes the operation handle 10 and a handle base (not shown) for assembling the operation handle 10 to the side door. The side door is maintained in a closed state by locking a door lock device (not shown) provided in the side door to the vehicle body. The outside handle device is connected to the door lock device via a cable device (not shown).

The operation handle 10 serves as a handle (grip) during an opening/closing operation of the side door, and is assembled to the side door in a horizontal posture in which a left side shown in Fig. 1 is directed to a front side of the vehicle. The assembly of the operation handle 10 is performed by connecting a hinge piece 11 formed at one end along a longitudinal direction of the operation handle 10 to the handle base disposed in the side door. The operation handle 10 is horizontally rotatably supported by the connection between the hinge piece 11 and the handle base. The operation handle 10 rotates by holding a central portion thereof and pulling the same toward the front side. When the hand is released from the operation handle 10, the operation handle 10 receives a force of a torsion spring (not shown) and returns (rotates) to the initial position.

An operation projection portion 12 (see Fig. 4) is formed at the other end in the longitudinal direction of the operation handle 10. The operation projection portion 12 is engaged with a rotating lever (not shown) to which the cable device is connected. When the operation projection portion 12 moves with the rotation operation of the operation handle 10, the rotating lever rotates and the operation force is transmitted to the door lock device via the cable device. Accordingly, the lock of the door lock device with respect to the side door is released.

The operation handle 10 includes the cover grip 20 and the body grip 30. The cover grip 20 is assembled to cover an outer side of the body grip 30 facing the side door. The cover grip 20 and the body grip 30 are formed by molding using an appropriate synthetic resin material in order to reduce the weight thereof and to enable wireless communication using an antenna 42 to be described later.

The cover grip 20 covers the outer side of the body grip 30 and constitutes a form of a design surface (surface facing the user) related to the operation handle 10. The cover grip 20 is made of a synthetic resin base material by die molding, and a decoration region De is set on the surface of the cover grip 20. The decoration region De has a function of setting the design of the operation handle 10, for example. The decoration region De according to the present embodiment is formed by coating the surface of the cover grip 20 with a metal plating. The metal plating is a chromium plating, for example. Metallic gloss (for example, silver) is presented on the surface of the cover grip 20 due to the decoration region De. The decoration region De provided with a chromium plating has conductivity in the whole region.

In addition, the cover grip 20 includes a finisher 22 which is a decoration member for enhancing the design of the operation handle 10. The finisher 22 has, for example, a laterally long shape along the longitudinal direction of the cover grip 20, and is assembled substantially at the center of the surface of the cover grip 20. The surface of the finisher 22 is painted, for example, in gold, and the surface of the cover grip 20 presents a region in a color different from that of the decoration region De.

As shown in Fig. 2, an opening portion 21 passing through front and back sides of the cover grip 20 is provided at a required position of the cover grip 20. The outside handle device according to the present embodiment detects a contact operation of the user to the operation handle 10 and locks or unlocks the door lock device. The opening portion 21 is provided corresponding to a detection region set on the surface of the operation handle 10, specifically, a detection region Db for a locking operation.

The body grip 30 serves as a handhold during a handle operation, and faces the side door with a gap therebetween. The hinge piece 11 is provided at one end of the body grip 30 and the operation projection portion 12 is provided at the other end.

A vertical wall portion 31 raised toward a back surface side of the cover grip 20 is formed at an end portion in the longitudinal direction of the body grip 30. A side wall portion 32 inclined toward an inner side of the body grip 30 is provided continuously at an upper end of the vertical wall portion 31. The side wall portion 32 is disposed at a position corresponding to the opening portion 21 of the cover grip 20, and the shape thereof corresponds to the opening shape of the opening portion 21. The side wall portion 32 faces outside from the opening portion 21 of the cover grip 20 in a state where the cover grip 20 is assembled to the body grip 30, and, together with the cover grip 20, constitutes a form on a surface side of the operation handle 10. Therefore, the side wall portion 32 is preferably set to a surface shape continuous with the form of the surface of the cover grip 20.

A film material 35 is transferred to the surface of a side wall portion 32. The film material 35 is formed of a film material having a color tone consistent with the metal plating (chromium plating) coated on the decoration region De, that is, the same or substantially same color tone (metallic gloss), and has non-conductivity as electrical properties. The film material 35 can be transferred and fixed to the surface of the side wall portion 32 by being integrally molded with the body grip 30 by insert molding.

On the surface of the operation handle 10, the side wall portion 32 facing outside from the opening portion 21 of the cover grip 20 is a detection region Db for the locking operation. As described above, since the decoration region De is set on the surface of the cover grip 20, the detection region Db for the locking operation and the decoration region De are respectively set on the surface of the operation handle 10. Particularly in the present embodiment, the entire periphery of the detection region Db is surrounded by the decoration region De.

In the state where the cover grip 20 is assembled to the body grip 30, various electronic parts are accommodated in the gap between the body grip 30 and the cover grip 20. Specifically, in the body grip 30, a recessed space portion 33 is formed in a portion facing the cover grip 20. In the state where the cover grip 20 is assembled to the body grip 30, the space portion 33 of the body grip 30 is closed by the cover grip 20, and a first sensor electrode 40, a second sensor electrode 41, the antenna 42, a circuit board 45, and the like are accommodated therein.

The first sensor electrode 40 is a sensor electrode which detects a change in capacitance in response to contact (or approach) of the user to the operation handle 10. In the present embodiment, the first sensor electrode 40 is configured to detect an unlocking operation performed on the operation handle 10. The first sensor electrode 40 is disposed, for example, on a bottom surface of the space portion 33, and the surface of the operation handle 10 (body grip 30) facing the side door serves as a detection region Da for a release operation. The user can perform the unlocking operation by holding the operation handle 10 with hand and touching the detection region Da for the unlocking operation.

The second sensor electrode 41 is a sensor electrode which detects a change in capacitance in response to the contact (or approach) of the user to the operation handle 10. In the present embodiment, the second sensor electrode 41 is configured to detect a locking operation performed on the operation handle 10. The second sensor electrode 41 is disposed on a back surface of a substrate forming the detection region Db for the locking operation, that is, a surface separated from a surface of the substrate, on the surface of the operation handle 10. Specifically, the second sensor electrode 41 is disposed on a back surface 32a of the side wall portion 32 of the body grip 30. The user can perform the locking operation by placing a finger on an inner side of a dividing line between the side wall portion 32 of the body grip 30 and the cover grip 20 surrounding the periphery thereof and touching the detection region Db for the locking operation.

The antenna 42 communicates with a portable device carried by the user.

The circuit board 45 is mounted with a detection circuit which detects the touch of the user on the operation handle 10 based on a change in capacitance. The circuit board 45 is connected to the first sensor electrode 40 and the second sensor electrode 41 separately. In addition, the circuit board 45 is connected to an authentication device on the vehicle side via a wire harness (not shown) .

The space portion 33 of the body grip 30 is filled with a filler 50 such as a mold resin. Electronic parts such as the first sensor electrode 40, the second sensor electrode 41, the antenna 42, and the circuit board 45 are integrated in a block shape by the filler 50 (the description of the filler 50 is omitted in Fig. 3 and Fig. 4) . The filling material 50 is set to include the second sensor electrode 41 as well.

In the outside handle device having such a configuration, when the detection circuit of the circuit board 45 determines that the capacitance has changed by a predetermined amount or more through the first sensor electrode 40, that is, touch of the user to the detection region Da for the unlocking operation is determined, an unlocking operation detection signal is output to the authentication device. The authentication device receiving the unlocking operation detection signal outputs an ID output request signal to the portable device of the user and waits for ID signal transmission from the portable device. When the authentication for the received ID signal is established, the authentication device permits the door lock device to release the locking state. Accordingly, the side door can be opened by rotating the operation handle 10.

On the other hand, when the detection circuit of the circuit board 45 determines that the capacitance has changed by a predetermined amount or more through the second sensor electrode 41, that is, touch of the user to the detection region Db for the locking operation is determined, an locking operation detection signal is output to the authentication device. The authentication device receiving the locking operation detection signal outputs an ID output request signal to the portable device of the user and waits for ID signal transmission from the portable device. When the authentication for the received ID signal is established, the authentication device instructs the door lock device to lock. Accordingly, even when the operation handle 10 rotates, the locking state of the door lock device with respect to the side door is maintained, so that the opening of the side door is restricted.

Accordingly, the outside handle device according to the present invention includes: the operation handle 10 which is assembled to the side door and serves as a handle during the opening/closing operation of the side door; and the sensor electrode (second sensor electrode) 41 which is provided in the operation handle 10, and is configured to detect the change in capacitance in response to the contact (or approach) of the human body to the detection region (detection region for the locking operation) Db set on the surface of the operation handle 10. Here, in the embodiment of the figures, the detection region Db and the decoration region De surrounding the entire periphery of the detection region Db are set on the surface of the operation handle 10. The detection region Db is electrically insulated from the decoration region De, and includes the sensor electrode 41 on the back surface 32a of the substrate forming the surface of the operation handle 10.

According to such a configuration, the sensor electrode 41 is disposed at a position corresponding to the detection region Db on the back surface 32a of the substrate forming the surface of the operation handle 10. Therefore, the sensor electrode 10 is disposed at a position separated from the surface of operation handle 10 by a thickness of the substrate, so that the sensor electrode 41 can be disposed close to the detection region Db. Moreover, the detection region Db can be formed by the operation handle 10 itself. Therefore, the detection sensitivity of the sensor electrode 41 can be improved without adding a separate member.

In addition, the detection region Db is electrically insulated from the decoration region De surrounding the entire periphery of the detection region Db. Therefore, even when the decoration region De is configured to have conductivity, the decoration region De and the detection region Db are not in a conductive state. Therefore, it is possible to solve a problem that when the user touches the decoration region De, there is a possibility that erroneous detection occurs.

Therefore, according to the present invention, it is possible to provide an outside handle device which prevents an increase in the number of parts and which is excellent in detection sensitivity of the sensor electrode.

In addition, in the present invention, the operation handle 10 includes the body grip 30 facing the side door with a gap therebetween and the cover grip 20 assembled to cover the outer side of the body grip 30. Here, the cover grip 20 includes the opening portion 21 passing through the front and back sides of the cover grip 20. The body grip 30 includes the side wall portion 32 facing outside from the opening portion 21 of the cover grip 20 in the state where the cover grip 20 is assembled. The detection region Db is set on the side wall portion 32.

According to this configuration, the detection region Db is formed by the side wall portion 32 of the body grip 30, so that the detection region Db can be formed by the operation handle 10 itself. Accordingly, it is not necessary to add a separate member, so that it is possible to prevent an increase in the number of parts.

Further, the filler 50 filled in the space portion 33 in which the electronic parts are accommodated can also be set for the sensor electrode 41 by disposing the sensor electrode 41 with respect to the body grip 30. Accordingly, the waterproofness of the sensor electrode 41 can be ensured.

In addition, the surface of the operation handle 10 is formed by the side wall portion 32 of the body grip 30 and the cover grip 20, and thereby the dividing line appears at a boundary between the side wall portion 32 of the body grip 30 and the cover grip 20 surrounding the periphery thereof. This dividing line makes it possible to clearly display the position of the detection region Db to the user.

In the present embodiment, a part of the body grip 30 is exposed to the opening portion 21 of the cover grip 20, and the detection region Db is set there. However, the surface of the operation handle 10 may be formed only by the cover grip 20, and the sensor electrode 41 may be set on the back surface of the cover grip 20 corresponding to the detection region Db.

In addition, the decoration region De includes the metal plating coated on the surface of the operation handle 10, and the detection region Db has a color tone consistent with that of the metal plating of the decoration region De.

According to this configuration, the metal plating of the decoration region De and the surface state of the detection region Db can be matched. Accordingly, the design of the surface of the operation handle 10 can be improved. However, from the viewpoint of design, the detection region Db may have a different color tone.

Since the detection region Db is insulated from the decoration region De, both regions are not in a conductive state even when the decoration region De includes the metal plating. Therefore, it is possible to solve a problem that when the user touches the decoration region De, erroneous detection occurs.

The detection region Db may be insulated from the decoration region De by forming the entire region with a non-conductive material.

In this case, the detection region Db may be formed of a non-conductive material simply by forming the side wall portion 32 of the body grip 30 with a non-conductive material without performing surface treatment such as decoration. Further, the detection region Db may be formed of a non-conductive material by forming the side wall portion 32 of the body grip 30 with a conductive (or non-conductive) material and performing surface treatment on the side wall portion 32 with a non-conductive material.

In the present invention, the detection region Db has the non-conductive film material 35 transferred to the surface of the operation handle 10, transferred to the surface of the side wall portion 32 of the body grip 30 and accordingly the detection region Db is formed of a non-conductive material.

According to this configuration, the entire region of the detection region Db has non-conductivity by transferring the non-conductive film material 35. Accordingly, the detection region Db and the decoration region De can be electrically insulated.

Further, since as long as the color tone of the film material 35 is set, the surface treatment of the detection region Db can be easily realized, and consistency with the decoration region De can be appropriately achieved. In addition, the surface state of the detection region Db can be easily consistent with the decoration region De by performing the surface treatment of the detection region Db using the film material 35. Therefore, the range of selection of surface treatment for the decoration region De can be expanded.

In the present embodiment, the decoration region De refers to a design region of the operation handle 10, and may be set on all or a part of the surface of the operation handle 10. In addition, the decoration region De is not necessarily intended to be specially decorated, and may be formed of the substrate itself.

In the present embodiment, the surface of the operation handle 10 refers to the entire region of the surface exposed to the outside, and includes not only the surface (design surface) visually recognized when the operation handle 10 is assembled to the side door, but also the surface facing the side door.

In addition, in the present embodiment, the detection region Db is formed of a non-conductive material, and thereby the detection region Db is electrically insulated from the decoration region De. However, the detection region Db may be formed of a conductive material. In this case, the detection region Db has conductivity, but a gap or the like may be formed at the boundary between the decoration region De and the detection region Db, so that the detection region Db is electrically insulated from the decoration region De.

In this way, in the present embodiment, the state where the detection region Db is electrically insulated from the decoration region De may be not only a state where the detection region Db is formed of a non-conductive material, but also a state where an insulating portion is disposed at the boundary between the detection region Db and the decoration region De. In the latter case, the insulating portion may be formed of a gap (air gap) as described above, or may be formed of a non-conductive member.

Further, in the present embodiment, the film material 35 is transferred to the detection region Db to set the color tone, but a film layer having a predetermined color tone may be formed by a method such as vapor deposition, and the film material 35 may be replaced by the film layer. However, when being used, the film material 35 can be integrally molded with the body grip 30, so that there is an advantage that the manufacturing process is simple.

Furthermore, in the present embodiment, the entire periphery of the detection region Db is surrounded by the decoration region De, but only a part of the periphery of the detection region Db may be surrounded by the decoration region De.

Moreover, in the present embodiment, the outside handle device applied to the side door is illustrated, but the outside handle device can be applied to various vehicle doors including a back door.

Although the handle device according to the present embodiment has been described above, it is apparently that the present invention is not limited to the above embodiment, and various modifications are possible within the scope of the invention as defined by the appended claim. For example, the handle device can be applied to various doors other than the vehicle door.

### [Reference Signs List]

10 operation handle
11 hinge piece
12 operation projection portion
20 cover grip
21 opening portion
22 finisher
30 body grip
31 vertical wall portion
32 side wall portion
32a back surface
33 space portion
35 film material
40 first sensor electrode
41 second sensor electrode
42 antenna
45 circuit board
De decoration region
Da detection region for unlocking operation
Db detection region for locking operation

## Claims

1. A handle device comprising:
an operation handle (10) which is assembled to a door and serves as a handle during an opening/closing operation of the door; and
a sensor electrode (41) which is provided in the operation handle (10), and which is configured to detect a change in capacitance in response to contact or approach of a human body to a detection region (Db) set on a surface of the operation handle (10),
wherein the surface of the operation handle (10) includes the detection region (Db) and a decoration region (De) surrounding all or a part of a periphery of the detection region (Db), and
wherein the detection region (Db) is electrically insulated from the decoration region (De), and the sensor electrode (41) is disposed on a back surface of a substrate which is a part of the surface of the operation handle (10), wherein
the operation handle (10) includes a body grip (30) facing the door with a gap therebetween and a cover grip (20) assembled to cover an outer side of the body grip (30),
the cover grip (20) includes an opening portion (21) passing through front and back sides of the cover grip (20),
the body grip (30) includes a side wall portion (32) facing outside from the opening portion (21) of the cover grip (20) in a state that the cover grip (20) is assembled, the detection region (Db) is disposed on the side wall portion (32),
the decoration region (De) has a metal plating coated on the surface of the operation handle (10), **characterized in that**
the detection region (Db) has a color tone consistent with the metal plating of the decoration region (De), and
the detection region (Db) has a non-conductive film material (35) transferred to the surface of the operation handle (10), transferred to the surface of the side wall portion (32) of the body grip (30).

## Patentansprüche

1. Griffvorrichtung, welche aufweist:
einen Betätigungsgriff (10), der an einer Tür montiert ist und während eines Öffnungs-/Schließvorgangs der Tür als Griff dient, sowie eine in dem Betätigungsgriff (10) angeordnete Sensorelektrode (41), die dazu vorgesehen ist, eine Kapazitätsveränderung zu detektieren, die als Reaktion auf einen Kontakt oder eine Annäherung eines menschlichen Körpers mit einem/an einen an einer Oberfläche des Betätigungsgriffs (10) angeordneten Detektionsbereich (Db) auftritt,
wobei die Oberfläche des Betätigungsgriffs (10) den Detektionsbereich (Db) aufweist sowie einen eine Peripherie des Detektionsbereichs (Db) ganz oder teilweise umgebenden dekorativen Bereich (De) aufweist,
wobei der Detektionsbereich (Db) von dem dekorativen Bereich (De) elektrisch isoliert ist und die Sensorelektrode (41) an einer rückwärtigen Fläche eines Substrats, welche Teil der Oberfläche des Betätigungsgriffs (10) ist, angeordnet ist,
wobei
der Betätigungsgriff (10) einen Griffkörper (30) aufweist, der - mit einem dazwischen angeordneten Spalt - der Tür zugewandt ist, und eine Griffabdeckung (20) aufweist, die so montiert ist, dass sie eine Außenseite des Griffkörpers (30) abdeckt,
die Griffabdeckung (20) einen Öffnungsbereich (21) aufweist, der sich durch Vorder- und Rückseiten der Griffabdeckung (20) erstreckt,
der Griffkörper (30) einen Seitenwandbereich (32) aufweist, der in einem montierten Zustand der Griffabdeckung (20) von dem Öffnungsbereich (21) der Griffabdeckung (20) nach außen gewandt ist, wobei der Detektionsbereich (Db) auf dem Seitenwandbereich (32) angeordnet ist,
der dekorative Bereich (De) eine Metallplattierung aufweist, mit der die Oberfläche des Betätigungsgriffs (10) beschichtet ist,
**dadurch gekennzeichnet, dass**
der Detektionsbereich (Db) einen mit der Metallplattierung des dekorativen Bereichs (De) übereinstimmenden Farbton aufweist und
der Detektionsbereich (Db) ein nichtleitendes Folienmaterial (35) aufweist,
welches auf die Oberfläche des Betätigungsgriffs (10) und auf die Oberfläche des Seitenwandbereichs (32) des Griffkörpers (30) transferiert ist.

## Revendications

1. Dispositif de poignée, comprenant :
une poignée d'actionnement (10) monté sur une portière et fonctionnant comme poignée pendant un procès d'ouverture/de fermeture de la portière ; et
une électrode de capteur (41) fournie dans la poignée d'actionnement (10) et prévue pour détecter un changement de capacitance en réponse à un contact ou un approchement d'un corps humain à une zone de détection (Db) qui est disposée sur une surface de la poignée d'actionnement (10),
où la surface de la poignée d'actionnement (10) inclut la zone de détection (Db) et une zone décorative (De) entourant toute la périphérie ou une partie d'une périphérie de la zone de détection (Db), et
où la zone de détection (Db) est isolée électriquement de la zone décorative (de) et l'électrode de capteur (41) est disposée sur une face arrière d'un substrat qui fait partie de la surface de la poignée d'actionnement (10), où
la poignée d'actionnement (10) comporte un corps de poignée (30), faisant face à la portière avec une fente entre eux, et une couverture de poignée (20) monté pour couvrir une face extérieure du corps de poignée (30),
la couverture de poignée (20) inclut une partie à ouverture (21) passant à travers des faces avant et arrière de la couverture de poignée (20),
le corps de poignée (30) inclut une partie paroi latérale (32) tournée au dehors de la partie d'ouverture (21) de la couverture de poignée (20) dans un état où la couverture de poignée (20) est montée et la zone de détection (Db) est disposée sur la partie paroi latérale (32),
la zone décorative (De) comporte un placage métallique revêtu sur la surface de la poignée d'actionnement (10),
**caractérisé en ce que**
la zone de détection (Db) présente un ton de couleur conforme au placage métallique de la zone décorative (De), et
la zone de détection (Db) comporte un matériau de film non-conductif (35) transféré à la surface de la poignée d'actionnement (10), transféré à la surface de la partie paroi latérale (32) du corps de poignée (30).
